# NOUVEAU FASCICULE DE BREVET EUROPEEN

(11) **EP 0 995 641 B2**
(45) Date de publication et mention de la décision concernant l'opposition: **03.03.2010**
(45) Mention de la délivrance du brevet: 30.03.2005
(21) Numéro de dépôt: 99402563.3
(22) Date de dépôt: 18.10.1999
(51) Int. Cl.: B60R 21/06

(54) **Dispositif de protection tel que filet de protection pour vehicule automobile**
Schutzvorrichtung insbesondere Sicherheitsnetz für Kraftfahrzeuge
Safety device in particular safety net for vehicles

(30) Priorité: 20.10.1998 FR 9813112
(43) Date de publication de la demande: 26.04.2000
(73) Titulaire: CENTRE D'ETUDE ET RECHERCHE POUR L'AUTOMOBILE ( CERA), 51100 Reims (FR)
(72) Inventeur: Bonfils, Xavier, 51100 Reims (FR)
(74) Mandataire: Sayettat, Julien Christian

(56) Documents cités:
- EP-A- 0 768 214
- EP-B1- 0 642 955
- DE-A- 4 441 610
- DE-C- 19 729 660
- GB-A- 2 111 439

## Description

La présente invention concerne un dispositif de protection tel qu'un filet de protection pour véhicule automobile, et plus particulièrement un tel dispositif de protection du type comprenant une nappe de retenue en forme générale de quadrilatère possédant un point d'ancrage à chacun de ses angles supérieurs et un point de traction vers le bas à chacun de ses angles inférieurs

Un tel dispositif de protection selon le préambule de la revendication 1 est connu du document EP 0 768 214 A.

On connaît des filets de protection utilisés dans les véhicules du type break entre le volume réservé aux passagers et le compartiment à bagages. Ils ont pour fonction de retenir les charges arrière non arrimées lors d'un déplacement de ces charges vers l'avant, dû à une décélération plus ou moins forte du véhicule, notamment en cas de freinage ou de choc. De tels filets peuvent également être utilisés dans des véhicules tels que des utilitaires ou des monospaces.

A cet effet, ils sont tendus en une nappe sensiblement verticale en forme générale de quadrilatère, avec l'un de ses deux grands côtés horizontaux immédiatement au-dessous du pavillon du véhicule, et l'autre au niveau du haut des dossiers précités. Ils peuvent être disposés sur un enrouleur ou être fixes. Dans ce dernier cas, ils sont généralement tendus entre deux points d'ancrage supérieurs disposés de part et d'autre du pavillon et deux points de traction inférieurs, chacun relié par une sangle à une ferrure solidaire de la structure du véhicule. Chacune de ces ferrures est sensiblement disposée à la verticale d'un des points de traction, généralement au niveau du plancher du véhicule.

Dans le but de rigidifier la nappe de retenue, celle-ci est généralement bordée le long de ses deux bords horizontaux supérieur et inférieur, par un organe de raidissement tel qu'un tube. Ces deux tubes présentent chacun un certain nombre d'inconvénients, outre le fait que tous deux ont un poids non négligeable et sont relativement onéreux, tant en eux-mêmes que par les moyens nécessaires à leur fixation à la nappe de retenue.

En ce qui concerne le tube supérieur, il est généralement relié à la structure du véhicule par des moyens de liaison tels qu'un axe dont, à chaque extrémité, une rainure annulaire est disposée dans une encoche d'une patte de fixation. Pour des questions de mise en place, et pour permettre une adaptation aux variations dimensionnelles des structures du véhicule, un jeu est prévu, autorisant un déplacement du tube supérieur dans la direction perpendiculaire au plan de symétrie du véhicule.

Lorsqu'un effort horizontal est appliqué au tube dans sa zone médiane, un tel type de liaison autorise en premier lieu un certain glissement axial du tube, ce dernier travaillant alors en flexion, avant d'en assurer le blocage longitudinal, après quoi le tube travaille effectivement en traction. Au cours de la première phase de sa déformation, les efforts sont tels que le tube et la charge qui l'entraîne pénètrent dans le compartiment des passagers, le dispositif de protection jouant alors imparfaitement son rôle.

La présente invention vise tout d'abord à pallier ces inconvénients.

Plus particulièrement, l'invention vise notamment à fournir un filet de protection pour véhicule automobile évitant la nécessité de l'organe de raidissement supérieur.

Encore plus particulièrement, l'invention vise notamment à fournir un tel filet dont la partie supérieure travaille uniquement en traction.

A cet effet, l'invention a pour objet un dispositif de protection pour véhicule automobile, selon la revendication 1.

L'invention présente donc le premier avantage d'éliminer le tube de raidissement supérieur ainsi que les coûts qui en résultent. Le dispositif selon l'invention est également plus léger que les dispositifs connus.

Par ailleurs, un tel agencement est également préférable du point de vue de la sécurité. En effet, lorsqu'un effort horizontal est exercé sur le filet de retenue et donc sur sa bordure supérieure, cette dernière est déjà en tension et assure sa fonction de retenue dès qu'elle est sollicitée. Il n'est donc pas nécessaire qu'une certaine pénétration du filet et des objets qu'il retient se produise à l'intérieur du volume réservé aux passagers avant que le dispositif de protection soit efficace.

Lors de l'installation du dispositif, les points d'ancrage du filet de retenue sont en premier lieu fixés à l'extrémité des biellettes pivotantes. Cette fixation peut être réalisée facilement dans la mesure où la bordure supérieure du filet n'a pas à être alors sous tension. Lorsqu'un effort est ensuite exercé vers le bas sur les points de traction, il en résulte un pivotement des biellettes et par conséquent un écartement des points d'ancrage du filet de retenue. Il en résulte donc une mise en tension de cette bordure dans la direction horizontale.

Par biellette, on entend tout dispositif mécanique, généralement de forme allongée, fixé à une de ses extrémités à la structure du véhicule, et à un des points d'ancrage à son autre extrémité. Une telle biellette peut prendre la forme d'un crochet, par exemple en forme de mousqueton, mais peut être réalisée de toute autre manière dans un matériau rigide ou souple, ou même élastique, l'essentiel étant que, lorsque l'on exerce une traction vers le bas à l'extrémité de la biellette liée au point d'ancrage, il en résulte un pivotement vers l'extérieur de cette biellette autour de son autre extrémité. C'est ce pivotement qui provoque un écartement des deux points d'ancrage et, par conséquent, la mise en tension de la bordure supérieure du filet de retenue. La biellette peut encore être réalisée sous la forme d'un organe à déformation programmée permettant une absorption d'énergie.

D'autres inconvénients des dispositifs de protection connus se situent au niveau du tube de raidissement inférieur.

Ce tube se comporte en effet comme une poutre montée sur deux appuis d'extrémité et soumise à un effort de flexion provoquant dans un premier temps une certaine flèche élastique, puis une déformation permanente se traduisant par une pénétration des charges dans le volume réservé aux passagers. Il est important dans ce contexte de limiter la distance entre appui, sachant que la flèche est proportionnelle au cube de cette distance.

D'autre part, il est fastidieux pour l'utilisateur d'avoir à tendre indépendamment les deux sangles issues des deux points de traction. De plus, la tension doit être sensiblement égale sur les deux points de traction, sous peine d'un fonctionnement incorrect du dispositif.

La présente invention vise également à pallier ces inconvénients.

A cet effet, l'invention a donc aussi pour objet un dispositif de protection du type rappelé ci-dessus, comprenant en outre un organe de bord entre les deux angles inférieurs, et dans lequel lesdits deux points de traction sont reliés par une sangle de montage unique agencée pour passer dans deux points de coulissement fixés à la structure du véhicule et disposés sensiblement en dessous desdits points de traction, et des moyens de tension sont prévus entre le milieu de la sangle et le milieu dudit organe de bord.

En premier lieu, le milieu de l'organe de bord se trouve maintenant en appui sur le milieu de la sangle par l'intermédiaire des moyens de tension. La longueur de cet organe entre appuis est ainsi divisée par deux, ce qui limite de façon correspondante sa flèche maximum, ou permet, à flèche égale, une forte diminution de son inertie et donc de son poids et de son coût.

En outre, l'essentiel de la charge, lors d'une décélération brutale du véhicule, sera généralement concentré à proximité du plan de symétrie de ce véhicule, c'est-à-dire dans la zone médiane du filet de retenue et de l'organe de bord, c'est-à-dire à proximité de l'appui médian de ce dernier. La flèche en sera encore diminuée, l'essentiel de l'effort étant repris par la sangle travaillant en traction

Par ailleurs, il suffit désormais de tendre la sangle unique en un seul point, ce qui a pour effet, grâce aux points de coulissement, d'exercer une traction simultanée sur les deux points de traction et d'assurer une tension uniforme dans le filet de retenue.

un mode de réalisation particulier, ledit organe de bord inférieur est un organe rigide, par exemple un tube.

Egalement dans un mode de réalisation particulier, lesdits moyens de tension comprennent une sangle munie d'une boucle de réglage.

Plus particulièrement, le dispositif selon l'invention peut comprendre deux boucles, chacune engagée sur une moitié de la sangle de montage et munie d'un crochet agencé pour coopérer avec une ferrure inférieure solidaire de la structure du véhicule.

On décrira maintenant, à titre d'exemple non limitatif, un mode de réalisation particulier de l'invention, en référence aux dessins schématiques annexés dans lesquels :

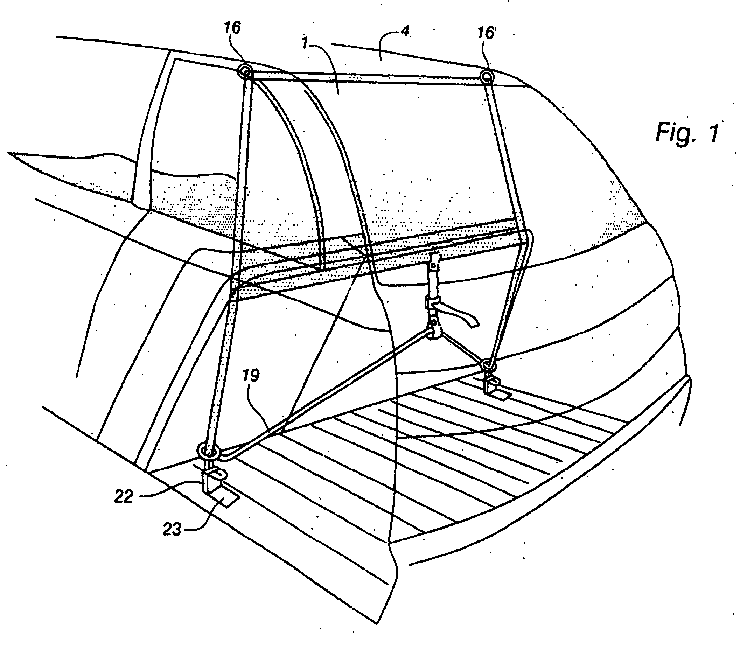

- la figure 1 est une vue en perspective et en transparence de l'arrière d'un véhicule muni d'un dispositif de protection selon l'invention ;
- la figure 2 est une vue également en perspective de ce dispositif;
- les figures 3 à 9 sont des vues en coupe, selon les lignes III-III à IX-IX de la figure 2 ; et
- les figures 10a et 10b illustrent le fonctionnement de la partie haute du dispositif de protection selon l'invention.

Ce dispositif est constitué pour l'essentiel par un filet de retenue 1 et par ses moyens de fixation. Les fils du filet 1 sont noués à leur intersection. Bien entendu, un filet d'un autre type pourrait être envisagé.

Le filet 1 est en forme de quadrilatère, et plus particulièrement de forme sensiblement rectangulaire. L'un des grands côtés, 2, de ce rectangle s'étend sensiblement horizontalement à sa partie inférieure, ici à peu près au niveau de la partie supérieure des sièges. L'autre grand côté, 3, parallèle au premier, s'étend à la partie supérieure du filet, au voisinage immédiat du pavillon 4 du véhicule. Les petits côtés 5 et 5' du filet 1 s'étendent sensiblement verticalement le long des bords de l'habitacle du véhicule.

La bordure inférieure du filet, constituée par le côté 2, comporte un tube raidisseur 6 engagé dans un fourreau 7, dont les bords 8 sont fixés le long du bord du filet 1 par tout moyen convenable 9, tel qu'une couture, des agrafes, des rivets, une soudure ou un collage.

Le long des côtés 5 et 5', une bordure 10 constituée par une bande en matériau textile ou plastique, est repliée sur elle-même de part et d'autre du bord du filet 1 et fixée au filet par des moyens tels que les moyens 9 précités.

Il en est de même le long du côté supérieur 3, si ce n'est que la bande 11 peut éventuellement être prévue plus résistante à l'allongement, de manière à éviter une flèche trop importante vers l'avant, dans le cas où des bagages seraient projetés dans le filet par une décélération brutale du véhicule.

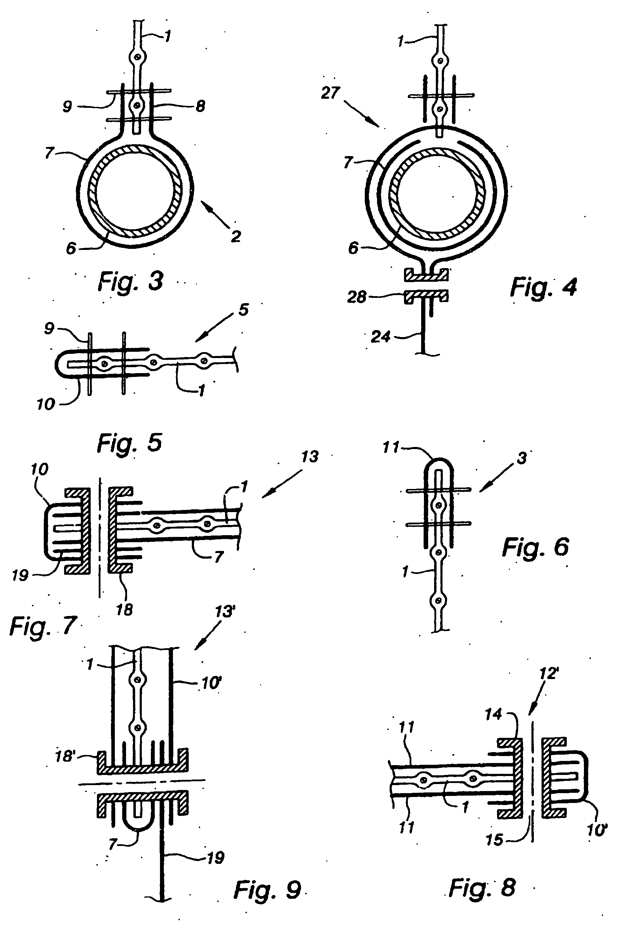

Les angles supérieurs du filet 1 forment deux points d'ancrage 12 et 12' et les deux angles inférieurs deux points de traction vers le bas 13 et 13'. A cet effet, ces angles sont munis de rivets tels que représenté aux figures 7 à 9.

On voit à la figure 8 que l'ensemble constitué du filet 1 bordé par la bande 11 repliée est lui-même recouvert par la bande 10'. Tout cet ensemble est traversé par un rivet 14 comportant un trou 15, de manière à former un oeillet. Dans cet oeillet est passé un crochet 16 en forme de mousqueton, permettant d'accrocher le point d'ancrage 12 ou 12' à une ferrure 17 ou 17' fixée à la structure du véhicule juste en dessous du pavillon 4.

On voit de même aux figures 7 et 9, que l'ensemble constitué par le filet 1 et les extrémités du fourreau 7 sont recouverts par les bandes repliées 10 et 10' respectivement et que cet ensemble est traversé par des rivets 16 et 16', munis ou non de trous. En outre, les deux extrémités d'une sangle 19 sont fixées au point de traction 13 et 13' à l'aide de ces rivets 16 et 16'.

La sangle 19 traverse des anneaux 20 et 20', de part et d'autre de son point milieu, ces anneaux étant ici réalisés d'une seule pièce avec des crochets 21 et 21' respectivement. Les crochets 21 et 21' sont prévus pour s'engager dans des anneaux 22 solidaires d'une ferrure 23 fixée au plancher du véhicule, en dessous des points d'ancrage et de traction, respectivement 16 et 13 d'une part, et 16' et 13' d'autre part

Une autre sangle 24, munie d'une bouche de réglage 25, relie le point milieu 26 de la sangle 19 au milieu 27 du bord inférieur du filet 1. La figure 4 montre le détail de l'assemblage du point 27 avec la sangle 24 qui entoure le tube 7 et le fourreau 6 et qui est bloquée par un rivet 28. Au niveau du point 26, la sangle 24 fait une simple boucle entourant la sangle 19 et est fixée par un rivet 29.

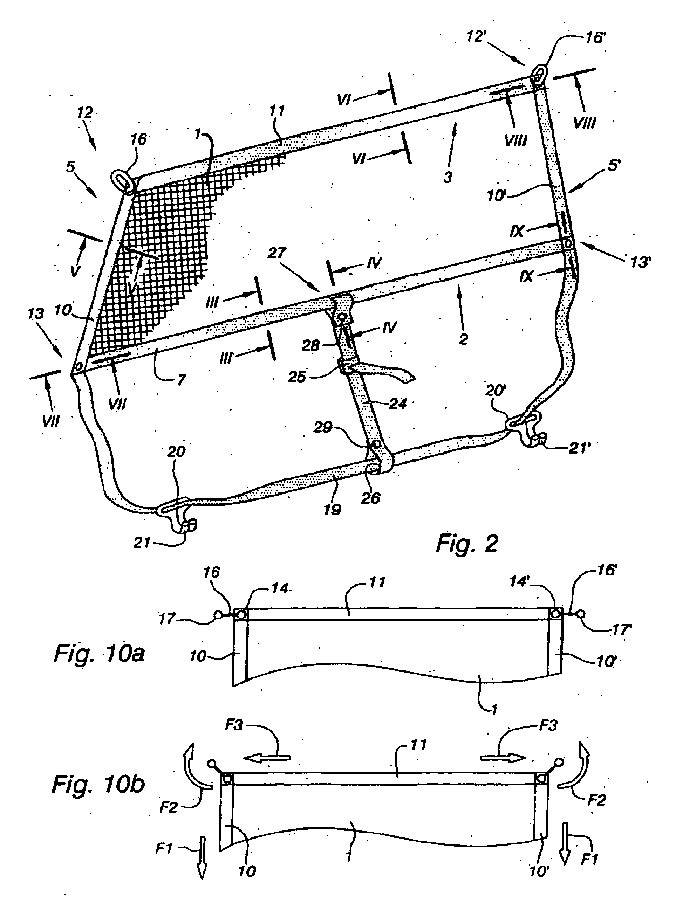

La longueur de la bordure supérieure du filet 1 est telle que cette bordure est tout juste tendue lorsque les mousquetons 16 et 16' sont mis en place, ces derniers étant donc sensiblement horizontaux, comme représenté à la figure 10a. Lorsque les crochets 21 et 21' sont engagés dans les anneaux 22 et qu'une traction est exercée sur la sangle 24 pour tendre cette dernière au moyen de la boucle de réglage 25, une traction est exercée vers le bas sur les points de traction 13 et 13' par l'intermédiaire des extrémités de la sangle 19. Cette traction se transmet au filet 1, et notamment aux bandes de bordure 10 et 10'.

Cette traction verticale représentée par les flèches F1 de la figure 10b entraîne une rotation des crochets 16 et 16' autour des points 17 et 17', comme représenté par les flèches F2. Cette rotation provoque à son tour une tension de la bordure supérieure du filet 1 et de la bande 11, comme montré par les flèches F3.

L'invention permet donc d'une part de supprimer l'organe de raidissement supérieur, tout en assurant une meilleure tension de la bordure supérieure du filet. D'autre part, la tension du filet est plus facile à réaliser, à l'aide d'une seule boucle de réglage, et les efforts sont mieux répartis au niveau de l'organe de raidissement inférieur.

On observera que tous les rivets décrits ci-dessus pourraient être remplacés par tous autres moyens convenables, et notamment par des coutures.

## Revendications

1. Dispositif de protection pour véhicule automobile du type comprenant un filet (1) de retenue en forme générale de quadrilatère présentant une bordure supérieure souple, **caractérisé par le fait que** :
- les angles supérieurs dudit filet forment deux points d'ancrage (12, 12'), ladite bordure souple étant entre lesdits points ;
- les deux angles inférieurs dudit filet forment deux points de traction vers le bas (13, 13') ; et que
- ledit dispositif comprend des moyens (16, 16', 19) pour mettre cette bordure en tension lors d'une traction exercée vers le bas sur lesdits points de traction, lesdits moyens de mise en tension étant formés **par le fait que** chaque point d'ancrage (12, 12') est agencé pour être relié à une ferrure supérieure (17, 17') solidaire de la structure du véhicule par une biellette (16, 16') de tension pivotante, relativement horizontale en l'absence de traction exercée sur lesdits points de traction vers le bas, de telle sorte que, lors de la traction exercée vers le bas sur lesdits points de traction, il en résulte un écartement desdits points d'ancrage et une mise en tension de ladite bordure dans la direction horizontale.

2. Dispositif de protection selon la revendication 1, dans lequel chacune desdites biellettes (16, 16') est formée d'un crochet.

3. Dispositif de protection selon la revendication 1 ou 2, comprenant un organe de bord (6) entre les deux angles inférieurs, et dans lequel lesdits deux points de traction (13, 13') sont reliés par une sangle de montage unique (19) agencée pour passer dans deux points de coulissement (22) fixes par rapport à la structure du véhicule et disposés sensiblement en dessous desdits points de traction, des moyens de tension (24, 25) étant prévus entre le milieu (26) de ladite sangle (19) et le milieu (27) dudit organe de bord.

4. Dispositif de protection selon la revendication 3, dans lequel ledit organe de bord est un organe rigide.

5. Dispositif de protection selon la revendication 4, dans lequel ledit organe de bord est un tube.

6. Dispositif de protection selon l'une quelconque des revendications 3 à 5, dans lesquelles lesdits moyens de tension comprennent une sangle (24) munie d'une bouche de réglage (25).

7. Dispositif de protection selon l'une quelconque des revendications 3 à 6, comprenant deux boucles de coulissement (20, 20'), chacune engagée sur une moitié de la sangle de montage (19) et munie d'un crochet (21, 21') agencé pour coopérer avec une ferrure inférieure (23) solidaire de la structure du véhicule.

## Claims

1. Safety device for vehicles of the type comprising a retaining net (1) in the general shape of a quadrilateral having a flexible upper edge, **characterised by** the fact that:
- the upper angles of said net form two anchoring points (12, 12'), said flexible edge being between said points;
- the two lower angles of said net form two traction points downwards (13, 13'); and that
- said device comprises means (16, 16', 19) for placing this edge under tension during a traction exerted downwards on said traction points, said means for placing under tension being formed by the fact that each anchoring point (12, 12') is arranged in order to be connected to an upper fitting (17, 17') fastened to the structure of the vehicle by a pivoting tensioner link (16, 16'), relatively horizontal in the absence of traction exerted on said traction points downwards, in such a way that, when traction is exerted downwards on said traction points, a separating of said anchoring points results and a placing under tension of said edge in the horizontal direction.

2. Safety device according to claim 1, wherein each of said links (16, 16') is formed of a hook.

3. Safety device according to claim 1 or 2, comprising an edge member (6) between the two lower angles, and wherein said two traction points (13, 13') are connected by a single mounting strap (19) arranged to pass through two fixed sliding points (22) in relation to the structure of the vehicle and arranged substantially below said traction points, means for placing under tension (24, 25) being provided between the middle (26) of said strap (19) and the middle (27) of said edge member.

4. Safety device according to claim 3, wherein said edge member is a rigid member.

5. Safety device according to claim 4, wherein said edge member is a tube.

6. Safety device according to any of claims 3 to 5, wherein said means for placing under tension include a strap (24) provided with an adjustable buckle (25).

7. Safety device according to any of claims 3 to 6, comprising two sliding buckles (20, 20'), each engaged over one half of the mounting strap (19) and provided with a hook (21, 21') arranged in order to interact with a lower fitting (23) fastened to the structure of the vehicle.

## Patentansprüche

1. Schutzvorrichtung für Kraftfahrzeuge, von der Art, die ein allgemein viereckiges Haltenetz (1), das eine biegsame obere Einfassung aufweist, umfasst, **dadurch gekennzeichnet, dass**:
- die oberen Winkel des Netzes zwei Ankerpunkte (12, 12') bilden, wobei sich die biegsame Einfassung zwischen den Punkten befindet;
- die beiden unteren Winkel des Netzes zwei Zugpunkte (13, 13') nach unten bilden; und dass
- die Vorrichtung Mittel (16, 16', 19) umfasst, um diese Einfassung bei einem nach unten auf die Zugpunkte ausgeübten Zug zu spannen, wobei die Spannmittel **dadurch** gebildet werden, dass jeder Ankerpunkt (12, 12') angeordnet ist, um mit einem oberen Beschlag (17, 17') verbunden zu werden, der mit der Struktur des Fahrzeugs über eine schwenkbaren Zugstange (16, 16') fest verbunden ist, die relativ waagerecht ist, wenn kein Zug auf die Zugpunkte nach unten ausgeübt wird, so dass sich bei dem nach unten auf die Zugpunkte ausgeübten Zug ein Abstand der Ankerpunkte und eine Spannung der Einfassung in der waagerechten Richtung ergeben.

2. Schutzvorrichtung nach Anspruch 1, wobei jede der Zugstangen (16, 16') aus einem Haken gebildet wird.

3. Schutzvorrichtung nach Anspruch 1 oder 2, umfassend ein Randorgan (6) zwischen den beiden unteren Winkeln, und wobei die beiden Zugpunkte (13, 13') durch einen einzigen Montagegurt (19) verbunden sind, der angeordnet ist, um durch zwei Gleitpunkte (22) zu gehen, die im Verhältnis zur Struktur des Fahrzeugs feststehen und im Wesentlichen unterhalb der Zugpunkte angeordnet sind, wobei Spannmittel (24, 25) zwischen der Mitte (26) des Gurtes (19) und der Mitte (27) des Randorgans bereitgestellt werden.

4. Schutzvorrichtung nach Anspruch 3, wobei das Randorgan ein starres Organ ist.

5. Schutzvorrichtung nach Anspruch 4, wobei das Randorgan eine Röhre ist.

6. Schutzvorrichtung nach einem der Ansprüche 3 bis 5, wobei die Spannmittel einen Gurt (24) umfassen, der mit einer Einstellmündung (25) ausgestattet ist.

7. Schutzvorrichtung nach einem der Ansprüche 3 bis 6, umfassend zwei Gleitschnallen (20, 20'), die jeweils auf einer Hälfte des Montagegurts (19) in Eingriff stehen und mit einem Haken (21, 21') ausgestattet sind, der angeordnet ist, um mit einem unteren Beschlag (23) zusammenzuwirken, der mit der Struktur des Fahrzeugs fest verbunden ist.
